# EUROPEAN PATENT APPLICATION

(11) **EP 4 825 536 A1**
(43) Date of publication of application: **21.10.2026**
(21) Application number: 26167910.4
(22) Date of filing: 26.03.2026
(51) Int. Cl.: B25J 9/10, B25J 9/06, B25J 9/16, B25J 18/06

(54) **SYSTEM AND METHOD FOR CONTROLLING A CONTINUUM ROBOT WHILST INSPECTING OR REPAIRING A COMPONENT**

(30) Priority: 16.04.2025 GB 202505724
(71) Applicant: Rolls-Royce plc, London N1 9FX (GB)
(72) Inventor: Norton, Andrew D, Derby, DE24 8BJ (GB); Wild, Samuel P, Derby, DE24 8BJ (GB); Dong, Xin, Derby, DE24 8BJ (GB)
(74) Representative: Rolls-Royce plc

(57) **Abstract**

A system (100, 200, 300, 700) for controlling a continuum robot (102, 202, 302, 702) whilst inspecting or repairing a component (104) includes a tendon (106, 706) of the continuum robot, a first sensor (110, 210, 310, 710) that generates an information related to a curvature of the first sensor, and at least one actuator (112, 113) that controls at least a pitch angle (*α*) and/or a radius (r) of the tendon and/or the first sensor. The system has a controller (114) that receives, from the first sensor, the information related to the curvature of the first sensor and corrects a current position of the continuum robot based on the curvature of the first sensor.

## Description

### FIELD

This disclosure relates to a system for controlling a continuum robot whilst inspecting or repairing a component. This disclosure further relates to a method for controlling the continuum robot whilst inspecting or repairing the component.

### BACKGROUND

Continuum robots (CR) have emerged as versatile systems capable of intricate maneuvers and operations in complex environments including on-wing (in-situ) inspection and repair of components such as those associated with gas turbine engines. Such CRs are typically tendon driven. The aforesaid snake-like robots can contort to navigate obstacle-ridden environments. However, it is difficult to establish accurate sensing and control of the CRs that is essential for crucial industrial adoption. For example, due to lack of accuracy in determination and correction of a shape of the CRs during an inspection or repair operation, reliable in-situ closed-loop control of CRs is challenging, which may hinder their widespread adoption. For example, a common challenge in CRs is twists and/or torsion. The twist is caused due to an unintended axial rotation caused by asymmetrical actuation of tendons, and/or routing and/or kinematics of the CRs. The twists can degrade an accuracy in detecting the shape of the CRs and may complicate control algorithms of the CRs.

Conventional methods of determining the twist in the CRs involve complex models or empirical methods that may not fully capture effects of tendon placement and tension. Further, certain conventional methods may measure twists up to a low value. The manufacturing and application of such conventional methods in CRs are costly, and they may be unable to determine twists and/or torsion accurately. Some conventional CRs address the issue of torsion partially, but fail to compensate for multi-directional twists or local curvature variations in the CR.

There exists a need for an improved system and method for addressing the abovementioned shortcomings and developing a CR that can be controlled as per desired requirements whilst inspecting or repairing components, or to at least provide a useful alternative to known systems and methods for controlling a continuum robot whilst inspecting or repairing a component.

### SUMMARY

In a first aspect, there is provided a system for controlling a continuum robot whilst inspecting or repairing a component. The system includes a tendon of the continuum robot extending along a central axis of the continuum robot. The system further includes a first sensor coupled to the continuum robot and extending along the central axis of the continuum robot. The first sensor is configured to generate an information related to a curvature of the first sensor. The system further includes at least one actuator coupled to the tendon and/or the first sensor. The at least one actuator is configured to control at least a pitch angle of the tendon and/or the first sensor and/or a radius of the tendon and/or the first sensor relative to the central axis. The at least one actuator is operatively coupled with the tendon and/or the first sensor. The system further includes a controller communicably coupled with the first sensor and the at least one actuator. The controller is configured to receive, from the first sensor, the information related to the curvature of the first sensor. The controller is further configured to determine a current shape of the tendon and/or the first sensor based on at least the information related to the curvature of the first sensor. The controller is further configured to receive or determine a current pitch angle of the tendon and/or the first sensor. The controller is further configured to determine a desired pitch angle of the tendon and/or the first sensor based on at least the current shape of the tendon and/or the first sensor and the current pitch angle of the tendon and/or the first sensor. The controller is further configured to actuate the at least one actuator to at least alter the current pitch angle of the tendon and/or the first sensor to the desired pitch angle, and/or the radius of the tendon and/or the first sensor relative to the central axis of the continuum robot. The controller is further configured to correct a current position of the continuum robot based on at least the alteration of the current pitch angle of the tendon and/or the first sensor to the desired pitch angle, and/or the radius of the tendon and/or the first sensor.

The system described herein may allow improved control of the shape of the continuum robot by dynamically, accurately, and flexibly controlling at least the pitch angle and/or the radius of the tendon and/or the first sensor of the continuum robot whilst inspection or repair of the component. Specifically, the system corrects the current position of the continuum robot to control the current shape of the continuum robot. The system may control the current shape of the sensor and/or tendon to correct the current position of the continuum robot. The correction of the current position of the continuum robot may eliminate errors due to parasitic twists, friction, strain, temperature, manufacturing variations, vibrations, signal processing, and/or humidity that may otherwise act on the continuum robot. The system may be applicable to tendon-driven continuum robots. The system may correct the current position of the continuum robot without the need of complex, or data-driven methods, thereby enabling repeatability and robustness. The accurate determination of the current shape of the tendon and/or the first sensor during the inspection or repair of the component may be used to determine deviations of the current pitch angle from a desired pitch angle, which may be in turn used to control the continuum robot whilst the inspection or repair of the component.

The system may be applicable to flexible instruments, catheters, borescopes, and any flexible tubular device requiring measurement or compensation of twist in real-time with less torsional stresses on the sensor. Further, the system works well for continuum robots, and/or any other flexible string-like device that may be used in inspection and repair of components of engines, automobiles, aerospace applications, medicinal applications, or any other environments. Some examples of application of the system of the present disclosure may include minimally invasive surgery, search and rescue operations, and so on. Further, the system may provide shape sensing and correction of flexible robots (such as, pneumatically actuated or concentric tube robots), flexible devices (such as, an endoscope or a borescope), and so on. The system may work well for active continuum robots possessing a random passive section or both an active section and a passive section, such as a Continuum Robot for Flexible Operations (COBRA) robot. The system may operate in real-time during the repair or inspection of the component and may allow monitoring and optimizing of the repair or inspection operation being performed on the component. Further, the system may enhance a service life of the continuum robot via reduction in wear and tear of the components of the continuum robot such as tendons of the continuum robot. Furthermore, the system may enhance a performance of the inspection or repair of the component.

In the system the controller is configured to receive or determine a current pitch angle of the tendon and/or the first sensor. As explained below, the current pitch angle of the tendon and/or the first sensor may be prestored in the controller and may be a previously noted pitch angle of the tendon and/or the first sensor. The current pitch angle is a state variable that can be initialised from a prestored value (e.g. calibrated during manufacturing), and/or can be updated in real time using either, actuator self-sensing (a benefit of dielectric elastomers) that can be used as displacement sensing that has been calibrated to the helix model or direct measurement using motion capture device. During operation, the controller can update the current pitch angle in real time at each control cycle, based on measured or estimated actuator deformation and known geometric relationship between the actuator deformation and helix parameters. In that way the pitch angle can be prestored and updated in real time as the actuator changes the helix geometry.

In the system a desired pitch angle may be determined based on a current shape and a current pitch angle. The desired pitch angle may be selected to improve a performance metric, or satisfy a control objective, this could be to reduce the torsional strain, or to improve the sensing accuracy. All while the robot is under loading conditions and given a robot current shape. The desired pitch angle would generally differ from the current pitch angle unless the robot/flexible device is already at an optimal state defined by control objective or performance metric.

In the system the radius of the tendon and/or the first sensor can be altered by the actuator. Using radius as an immediate variable, the controller can target pitch angle and it can achieves it by commanding actuator deformation that changes radius and/or pitch. The controller does not need an explicit desired radius as part of achieving alpha desired (pitch angle). Further to use direct radius control, i.e. radius as the target, the controller can optionally determine desired radius (e.g. from a look up table, constraints, objective function, control objective, or performance metric) and drive an actuator to achieve a desired radius.

In the system an actuator can alter the radius of a tendon or a sensor in a continuum robot. This can be achieved in various ways. For example, the actuator may comprise a dielectric elastomer actuator (DEA) arranged as an annular band, ring, segmented ring positioned around the continuum robot/flexible device body. The tendon/sensor may be routed through one or more low friction guides, (e.g. eyelets, groove, channels) carried by the ring, such that the guides constrain the tendon/sensor to a helix radius corresponding to the ring's radial position. When a voltage is applied, the DEA deforms and drives a change in displacement. This changes the radial distance r of the tendon/sensor from the central/neutral axis, thereby altering the helix radius and corresponding pitch angle.

In some examples, the system may include multiple tendons and/or multiple first sensors. In such examples, one of more tendons and/or first sensors may be employed for sensing, and one of more tendons and/or first sensors for actuation.

In some embodiments, the first sensor includes a Fibre Bragg grating (FBG) sensor.

In some embodiments, the information related to the curvature of the first sensor includes a strain distribution at one or more locations of the first sensor.

The FBG sensors may be used for enhanced proprioception of continuum robots because of their small diameter, flexibility, and immunity to electromagnetic interference, which may enable accurate generation of the information related to the curvature of the first sensor. Further, the first sensor may provide an enriched dataset corresponding to the information related to the curvature of the first sensor. The strain distribution at one or more locations of the first sensor may accurately provide the information related to the curvature of the first sensor.

In some embodiments, the current shape of the tendon and/or the first sensor is determined based on at least a tension in the tendon and/or the first sensor, a displacement of the tendon and/or the first sensor, and/or a pose of the continuum robot.

The determination of the tension in the tendon and/or the first sensor, the displacement of the tendon and/or the first sensor, and/or the pose of the continuum robot may allow accurate determination of the current shape of the tendon and/or the first sensor via mathematical methods and/or kinematic modelling techniques. In some examples, the controller may determine the tension in the tendon and/or the first sensor, the displacement of the tendon and/or the first sensor, and/or the pose of the continuum robot based on inputs received from the first sensor.

In some embodiments, the system further includes one or more of a second sensor configured to generate an information related to the tension in the tendon and/or the first sensor, a third sensor configured to generate an information related to the displacement of the tendon and/or the first sensor, and/or a fourth sensor configured to generate an information related to the pose of the continuum robot. The second sensor may include a load cell that may be attached to the tendon/or the first sensor. The load cell may detect variations in tensile or compressive forces on the continuum robot to generate information related to the tension in the tendon and/or the first sensor.

Further, the third sensor may include an encoder attached to a drive motor or an external displacement sensor attached to the continuum robot. The encoder may measure a change in a length of the continuum robot using optical, magnetic, capacitive, or inductive sensing sensors to generate information related to the displacement of the tendon and/or the first sensor. Further, the fourth sensor may include an inertial measurement unit (IMU) attached to the continuum robot. The IMU may continuously record an acceleration, an angular velocity, and/or a magnetic field data to generate information related to the pose of the continuum robot.

In some embodiments, the first sensor is coupled with the tendon of the continuum robot. The coupling of the first sensor with the tendon may ensure precise consideration of dynamics of tendons such as direct forces exerted by the tendons, thereby providing accurate information related to the curvature of the first sensor.

In some embodiments, the information related to the curvature of the first sensor is determined along each of an X-axis, a Y-axis, and a Z-axis of the continuum robot. The first sensor extending along the central axis of the continuum robot may allow accurate determination of the information related to the curvature of the first sensor along each of the X-axis, the Y-axis, and the Z-axis of the continuum robot. The determination of the curvature of the first sensor along each of the X-axis, the Y-axis, and the Z-axis of the continuum robot may provide for the accurate determination of the information related to the curvature of the first sensor.

In some embodiments, the at least one actuator is adapted to move the tendon and/or the first sensor along the central axis and/or a radial axis. The at least one actuator may include rings or bands. Thus, the actuator may allow correction of the current shape of the continuum robot along each of the central axis and/or the radial axis.

In some embodiments, the controller is configured to actuate the at least one actuator to at least alter a pitch of the tendon and/or the first sensor. Altering the pitch of the tendon and/or the first sensor may in turn allow variation in the shape of continuum robot, thereby allowing disposition of the continuum robot in a desired shape. The alteration of the current pitch angle of the tendon and/or the first sensor to the desired pitch angle, the radius of the tendon and/or the first sensor, and/or the pitch of the tendon and/or the first sensor relative to the central axis of the continuum robot provides for improved performance of the continuum robot whilst inspection or repair of the component.

In some embodiments, the at least one actuator includes a plurality of actuators disposed along the central axis. The controller is configured to selectively actuate one or more of the plurality of actuators to at least alter the current pitch angle of the tendon and/or the first sensor to the desired pitch angle, the radius of the tendon and/or the first sensor relative to the central axis of the continuum robot, and/or the pitch of the tendon and/or the first sensor.

The current pitch angle of the tendon and/or the first sensor may be prestored in the controller and may be a previous/last noted pitch angle of the tendon and/or the first sensor. The current pitch angle is altered in real time based on the movement of the tendon and/or the first sensor along the radial axis or the central axis of the continuum robot. The abovesaid alteration of the pitch angle may modify mechanical advantage, friction pathways, or force transmission associated with the continuum robot, which may in turn improve a performance of the continuum robot.

The selective actuation of the one or more of the plurality of actuators eases alteration of the current pitch angle of the tendon and/or the first sensor to the desired pitch angle, the radius of the tendon and/or the first sensor, and/or the pitch of the tendon and/or the first sensor relative to the central axis of the continuum robot. The selective actuation may cause the tendon and/or the first sensor to be disposed at different pitches, radii, and/or pitch angles relative to the length of the continuum robot. This may provide for effective twist and/or torsional compensation in the continuum robot.

In some embodiments, the at least one actuator includes an elastomer actuator, a piezoelectric actuator, a pneumatic artificial muscle, an electroactive polymer, and/or a shape-memory alloy. The at least one actuator may be chosen as per desired applications for improved control of the current shape of the continuum robot. In an example, the actuator may include a dielectric elastomer actuator (DEA). The DEA may exhibit a higher energy density, i.e. a large strain output for a relatively low volume, may provide improved control, and may be lightweight, thereby making it ideal for small-scale continuum robots requiring minimal stiffness interference. Further, the actuator may be modified by providing protective coatings, fluidic channels, insulation layers, and so on to ensure that the actuator can function in extreme conditions such as high temperature, radiation, or chemical exposure.

In some embodiments, the system further includes a driver circuit coupled to the controller and the at least one actuator. The driver circuit is configured to control the at least one actuator based on an input command received from the controller. The driver circuit may modulate an electric field as a function of the input commands, which may cause the actuator to move the tendon and/or the first sensor.

In some embodiments, the alteration of at least one of the current pitch angle of the tendon and/or the first sensor includes a change in a path length of the tendon and/or the first sensor. The path length of the tendon and/or the first sensor reduces with an increase in the current pitch angle of the tendon and/or the first sensor and the path length of the tendon and/or the first sensor increases with a decrease in the current pitch angle of the tendon and/or the first sensor.

In some embodiments, the continuum robot includes a backbone having a plurality of vertebrae and a plurality of tendons circumferentially arranged around the backbone at various angular positions. The tendon and/or the first sensor is disposed proximal to the backbone of the continuum robot and/or proximal to an outer surface defined by the continuum robot. Thus, the system of the present disclosure may be used to adjust the shape of different types of tendon driven robots.

In some embodiments, the first sensor includes a tendon from the plurality of tendons. Specifically, whilst the first sensor includes the tendon from a plurality of tendons, the first sensor itself operates as the tendon of the continuum robot and may be used to control a movement of the continuum robot. The inclusion of the first sensor as the tendon may ensure precise consideration of dynamics of tendons such as direct forces exerted by the tendons, thereby providing accurate information related to the curvature of the first sensor.

In some embodiments, a routing of the tendon and/or the first sensor includes a straight routing, a helical routing, a hybrid routing, a braided routing, a routing at various radii, a zig-zag routing, an asymmetric routing, and/or a segmented routing.

The aforesaid routing of the tendon and/or the first sensor may reduce torsion of the continuum robot due to redistribution of torsion into axial and torsional loads. The aforesaid routing may also simplify computations of the twists and torsion and may improve a control of the continuum robot.

In some embodiments, the controller is configured to determine a torsion in the continuum robot. The controller may be further configured to determine a torsion in the tendon and/or the first sensor based on the torsion in the continuum robot. The controller may be further configured to modify the current pitch angle to control the torsion (e.g. reduce the torsion) in the tendon and/or the first sensor.

The controller may determine the torsion in the continuum robot using kinematics or other sensing methods. Thus, the system may be used for tendon-driven continuum robots that are subjected to torsion during the repair or inspection of the component.

In some embodiments, the controller may be configured to determine a torsion in the continuum robot. The controller may be further configured to determine a desired torsion in the continuum robot. The controller may be further configured to modify the current pitch angle to match the torsion in the continuum robot and the desired torsion in the continuum robot.

The controller may determine the torsion in the continuum robot using kinematics or other sensing methods. Thus, the system may be used for correcting the current position of tendon-driven continuum robots that are subjected to torsion during the repair or inspection of the component.

In some embodiments, the component is a gas turbine engine component. The system may be used for controlling the continuum robot whilst inspecting or repairing various components associated with the gas turbine engine that have complex geometry and are difficult to access.

In some embodiments, the desired pitch angle of the tendon and/or the first sensor is determined based on at least the radius of the tendon and/or the first sensor from the central axis of the continuum robot, a nominal pitch of the tendon and/or the first sensor, a curvature of the continuum robot, and/or the current pitch angle.

The aforesaid determination of the desired pitch angle of the tendon and/or the first sensor may minimise effects due to torsional loads and may maximise an actuation force of the continuum robot.

In a second aspect, there is provided a method for controlling a continuum robot whilst inspecting or repairing a component. The method includes receiving, from a first sensor coupled to the continuum robot, an information related to a curvature of the first sensor. The first sensor extends along a central axis of the continuum robot. The method further includes determining a current shape of a tendon of the continuum robot and/or the first sensor based on at least the information related to the curvature of the first sensor. The tendon of the continuum robot extends along the central axis of the continuum robot. The method further includes receiving or determining a current pitch angle of the tendon and/or the first sensor. The method further includes determining a desired pitch angle of the tendon and/or the first sensor based on at least the current shape of the tendon and/or the first sensor and the current pitch angle of the tendon and/or the first sensor. The method further includes actuating at least one actuator of the continuum robot to at least alter the current pitch angle of the tendon and/or the first sensor to the desired pitch angle, and/or a radius of the tendon and/or the first sensor relative to the central axis of the continuum robot. The at least one actuator is operatively coupled with the tendon and/or the first sensor. The method further includes correcting a current position of the continuum robot based on at least the alteration of the current pitch angle of the tendon and/or the first sensor to the desired pitch angle, and/or the radius of the tendon and/or the first sensor.

The method described herein may allow improved control of the shape of the continuum robot by dynamically, accurately, and flexibly controlling at least the pitch angle and/or the radius of the tendon and/or the first sensor of the continuum robot whilst inspection or repair of the component. Specifically, the method corrects the current position of the continuum robot to control the current shape of the continuum robot. The method may control the current shape of the sensor and/or tendon to correct the current position of the continuum robot. The correction of the current position of the continuum robot may eliminate errors due to parasitic twists, friction, strain, temperature, manufacturing variations, vibrations, signal processing, and/or humidity that may otherwise act on the continuum robot. The method may be applicable to tendon-driven continuum robots. The method may correct the current position of the continuum robot without the need of complex, or data-driven methods, thereby enabling repeatability and robustness. The accurate determination of the current shape of the tendon and/or the first sensor during the inspection or repair of the component may be used to determine deviations of the current pitch angle from a desired pitch angle, which may be in turn used to control the continuum robot whilst the inspection or repair of the component.

The method may be applicable to flexible instruments, catheters, borescopes, and any flexible tubular device requiring measurement or compensation of twist in real-time with less torsional stresses on the sensor. Further, the method works well for continuum robots, and/or any other flexible string-like device that may be used in inspection and repair of components of engines, automobiles, aerospace applications, medicinal applications, or any other environments. Some examples of application of the method of the present disclosure may include minimally invasive surgery, search and rescue operations, and so on. Further, the method may provide shape sensing and correction of flexible robots (such as, pneumatically actuated or concentric tube robots), flexible devices (such as, an endoscope or a borescope), and so on. The method may work well for active continuum robots possessing a random passive section or both an active section and a passive section, such as a Continuum Robot for Flexible Operations (COBRA) robot. The method may operate in real-time during the repair or inspection of the component and may allow monitoring and optimizing of the repair or inspection operation being performed on the component. Further, the method may enhance a service life of the continuum robot via reduction in wear and tear of the components of the continuum robot such as tendons of the continuum robot. Furthermore, the method may enhance a performance of the inspection or repair of the component.

In some examples, one of more tendons and/or first sensors may be employed for sensing, and one of more tendons and/or first sensors for actuation.

In some embodiments, the first sensor includes a Fibre Bragg grating (FBG) sensor.

The FBG sensors may be used for enhanced proprioception of continuum robots because of their small diameter, flexibility, and immunity to electromagnetic interference, which may enable accurate generation of the information related to the curvature of the first sensor. Further, the sensor may provide an enriched dataset corresponding to the information related to the curvature of the first sensor. The strain distribution at one or more locations of the first sensor may accurately provide the information related to the curvature of the first sensor.

In some embodiments, the step of determining the current shape of the tendon of the continuum robot and/or the first sensor further includes determining the current shape of the tendon and/or the first sensor based on at least a tension in the tendon and/or the first sensor, a displacement of the tendon and/or the first sensor, and/or a pose of the continuum robot.

The determination of the tension in the tendon and/or the first sensor, the displacement of the tendon and/or the first sensor, and/or the pose of the continuum robot may allow accurate determination of the current shape of the tendon and/or the first sensor via mathematical methods and/or kinematic modelling techniques. In some examples, the controller may determine the tension in the tendon and/or the first sensor, the displacement of the tendon and/or the first sensor, and/or the pose of the continuum robot based on inputs received from the first sensor.

In some embodiments, the first sensor includes a tendon from a plurality of tendons of the continuum robot or the first sensor is coupled with the tendon of the continuum robot. Specifically, whilst the first sensor includes the tendon from a plurality of tendons, the first sensor itself operates as the tendon of the continuum robot and may be used to control a movement of the continuum robot. The inclusion of the first sensor as the tendon as well as the coupling of the first sensor with the tendon may ensure precise consideration of dynamics of tendons such as direct forces exerted by the tendons, thereby providing accurate information related to the curvature of the first sensor.

In some embodiments, the step of actuating the at least one actuator to at least alter the current pitch angle of the tendon and/or the first sensor to the desired pitch angle, and/or the radius of the tendon and/or the first sensor further includes moving the tendon and/or the first sensor along the central axis and/or a radial axis.

The at least one actuator may include rings or bands. The actuator may allow correction of the current shape of the continuum robot along each of the central axis and/or the radial axis.

Altering the current pitch angle of the tendon and/or the first sensor may in turn allow variation in the shape of continuum robot, thereby allowing disposition of the continuum robot in a desired shape. The alteration of the current pitch angle of the tendon and/or the first sensor to the desired pitch angle, the radius of the tendon and/or the first sensor, and/or the pitch of the tendon and/or the first sensor relative to the central axis of the continuum robot provides for improved performance of the continuum robot whilst inspection or repair of the component.

The current pitch angle of the tendon and/or the first sensor may be prestored in the controller and may be a previous/last noted pitch angle of the tendon and/or the first sensor. The current pitch angle is altered in real time based on the movement of the tendon and/or the first sensor along the radial axis or the central axis of the continuum robot. The abovesaid alteration of the pitch angle may modify mechanical advantage, friction pathways, or force transmission associated with the continuum robot, which may in turn improve a performance of the continuum robot.

In some embodiments, the method may further include determining a torsion in the continuum robot. The method may further include determining a torsion in the tendon and/or the first sensor based on the torsion in the continuum robot. The method may further include modifying the current pitch angle to control the torsion (e.g. reduce to torsion) in the tendon and/or the first sensor.

The controller may determine the torsion in the continuum robot using kinematics or other sensing methods. Thus, the system may be used for tendon-driven continuum robots that are subjected to torsion during the repair or inspection of the component.

The details of one or more examples of the disclosure are set forth in the accompanying drawings and the description below. Other features, objects, and advantages of the disclosure will be apparent from the description and drawings, and from the claims.

The skilled person will appreciate that except where mutually exclusive, a feature or parameter described in relation to any one of the above aspects may be applied to any other aspect. Furthermore, except where mutually exclusive, any feature or parameter described herein may be applied to any aspect and/or combined with any other feature or parameter described herein.

### BRIEF DESCRIPTION OF THE DRAWINGS

Embodiments will now be described by way of example only, with reference to the Figures, in which:
**FIG. 1** shows a sectional side view of a gas turbine engine;
**FIG. 2A** shows a schematic perspective view of a system for controlling a continuum robot whilst inspecting or repairing a component, in accordance with an embodiment of the present disclosure;
**FIG. 2B** shows a schematic perspective view of a system for controlling a continuum robot whilst inspecting or repairing the component, in accordance with another embodiment of the present disclosure;
**FIG. 2C** shows a schematic perspective view of a system for controlling a continuum robot whilst inspecting or repairing the component, in accordance with yet another embodiment of the present disclosure;
**FIG. 3** shows a perspective view of the system of FIG. 2A having an actuator placed parallel to the central axis;
**FIG. 4** illustrates a perspective view of the system of FIG. 2A having an actuator placed perpendicular to the central axis;
**FIG. 5** illustrates a system for controlling a continuum robot whilst inspecting or repairing the component, in accordance with another embodiment of the present disclosure;
**FIG. 6** illustrates a current pitch angle of a tendon and/or a first sensor associated with the system of FIG. 5; and
**FIG. 7** shows a flowchart of a method for controlling the continuum robot whilst inspecting or repairing the component.

### DETAILED DESCRIPTION

Aspects and embodiments of the present disclosure will now be discussed with reference to the accompanying figures. Further aspects and embodiments will be apparent to those skilled in the art.

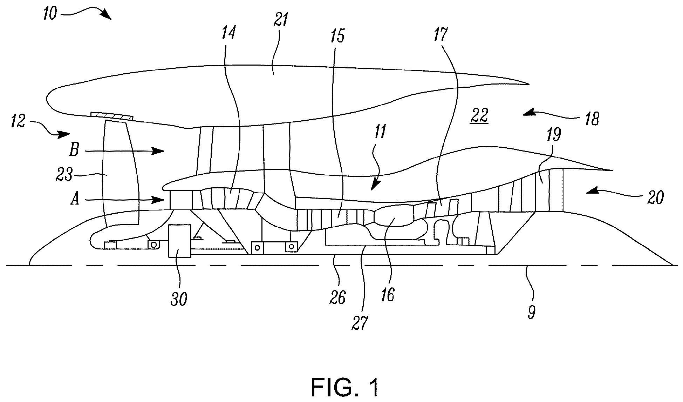

FIG. 1 illustrates a gas turbine engine 10 having a principal rotational axis 9. The engine 10 comprises an air intake 12 and a propulsive fan 23 that generates two airflows: a core airflow A and a bypass airflow B. The gas turbine engine 10 comprises a core 11 that receives the core airflow A. The engine core 11 comprises, in axial flow series, a low pressure compressor 14, a high pressure compressor 15, combustion equipment 16, a high pressure turbine 17, a low pressure turbine 19, and a core exhaust nozzle 20. A nacelle 21 surrounds the gas turbine engine 10 and defines a bypass duct 22 and a bypass exhaust nozzle 18. The bypass airflow B flows through the bypass duct 22. The fan 23 is attached to and driven by the low pressure turbine 19 via a shaft 26 and an epicyclic gearbox 30.

In use, the core airflow A is accelerated and compressed by the low pressure compressor 14 and directed into the high pressure compressor 15 where further compression takes place. The compressed air exhausted from the high pressure compressor 15 is directed into the combustion equipment 16 where it is mixed with fuel and the mixture is combusted. The resultant hot combustion products then expand through, and thereby drive, the high pressure and low pressure turbines 17, 19 before being exhausted through the core exhaust nozzle 20 to provide some propulsive thrust. The high pressure turbine 17 drives the high pressure compressor 15 by a suitable interconnecting shaft 27. The fan 23 generally provides the majority of the propulsive thrust. The epicyclic gearbox 30 is a reduction gearbox.

Note that the terms "low pressure turbine" and "low pressure compressor" as used herein may be taken to mean the lowest pressure turbine stages and lowest pressure compressor stages (i.e., not including the fan 23) respectively and/or the turbine and compressor stages that are connected together by the interconnecting shaft 26 with the lowest rotational speed in the engine (i.e., not including the gearbox output shaft that drives the fan 23). In some literature, the "low pressure turbine" and "low pressure compressor" referred to herein may alternatively be known as the "intermediate pressure turbine" and "intermediate pressure compressor". Where such alternative nomenclature is used, the fan 23 may be referred to as a first, or lowest pressure, compression stage.

Other gas turbine engines to which the present disclosure may be applied may have alternative configurations. For example, such engines may have an alternative number of compressors and/or turbines and/or an alternative number of interconnecting shafts. By way of further example, the gas turbine engine 10 shown in FIG. 1 has a split flow nozzle 18, 20 meaning that the flow through the bypass duct 22 has its own nozzle 18 that is separate to and radially outside the core exhaust nozzle 20. However, this is not limiting, and any aspect of the present disclosure may also apply to engines in which the flow through the bypass duct 22 and the flow through the core 11 are mixed, or combined, before (or upstream of) a single nozzle, which may be referred to as a mixed flow nozzle. One or both nozzles (whether mixed or split flow) may have a fixed or variable area. Whilst the described example relates to a turbofan engine, the disclosure may apply, for example, to any type of gas turbine engine, such as an open rotor (in which the fan stage is not surrounded by a nacelle) or turboprop engine, for example. In some arrangements, the gas turbine engine 10 may not comprise a gearbox 30.

The geometry of the gas turbine engine 10, and components thereof, is defined by a conventional axis system, comprising an axial direction (which is aligned with the rotational axis 9), a radial direction (in the bottom-to-top direction in FIG. 1), and a circumferential direction (perpendicular to the page in the FIG. 1 view). The axial, radial, and circumferential directions are mutually perpendicular.

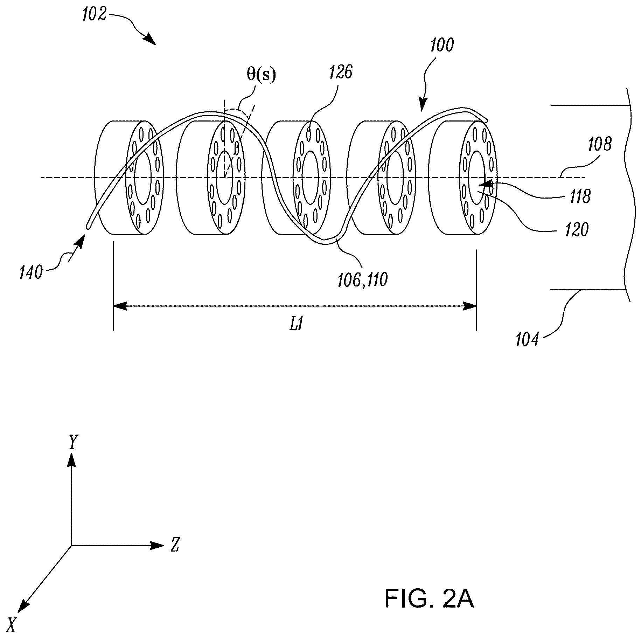

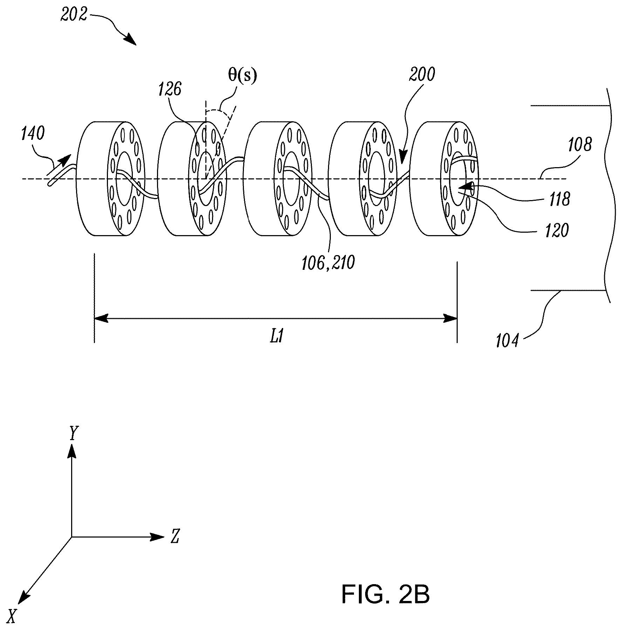

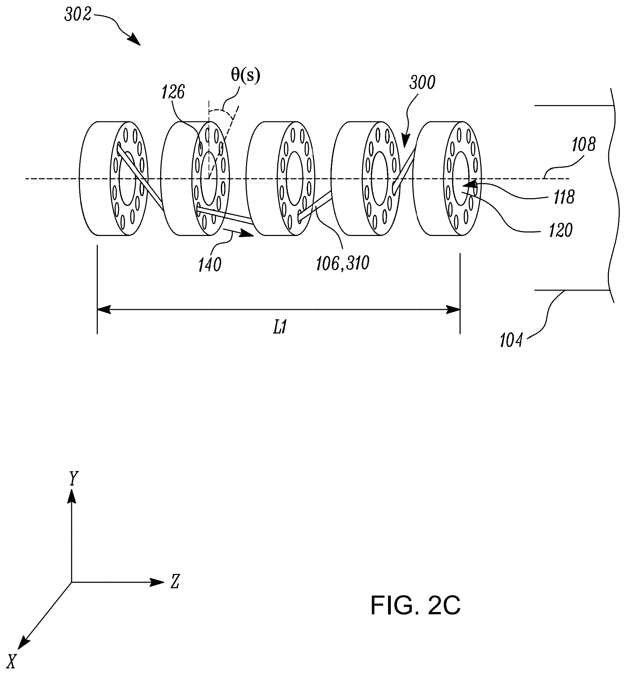

**FIGS. 2A****,** **2B****, and** **2C** show schematic perspective views of a continuum robot 102, 202, 302, in accordance with various embodiments of the present disclosure. Referring to FIGS. 2A to 2C, the present disclosure relates to a system 100, 200, 300 for controlling the continuum robot 102, 202, 302 whilst inspecting or repairing a component 104. In an embodiment, the component 104 is a gas turbine engine 10 (shown in FIG. 1) component. The component 104 may be the turbine 17, 19 (shown in FIG. 1), the compressor 14, 15 (shown in FIG. 1), the combustion equipment 16 (shown in FIG. 1), and the like. The system 100, 200, 300 may be used for controlling the continuum robot 102, 202, 302 whilst inspecting or repairing various components 104 associated with the gas turbine engine 10 that typically have complex geometry and are difficult to access. In an embodiment, the continuum robot 102, 202, 302 includes a backbone 118 having a plurality of vertebrae 120 and a plurality of tendons 126 circumferentially arranged around the backbone 118 at various angular positions *θ*(*s*). The system 100, 200, 300 of the present disclosure may be used to adjust a shape/position of different types of tendon-driven robots.

Referring now to FIG. 2A, the system 100 includes a tendon 106 of the continuum robot 102 extending along a central axis 108 of the continuum robot 102. The system 100 further includes a first sensor 110 coupled to the continuum robot 102. The first sensor 110 extends along the central axis 108 of the continuum robot 102. In the illustrated embodiment of FIG. 2A, the first sensor 110 includes the tendon 106 from the plurality of tendons 126. The first sensor 110 itself operates as the tendon 106 and may be used to control a movement of the continuum robot 102.

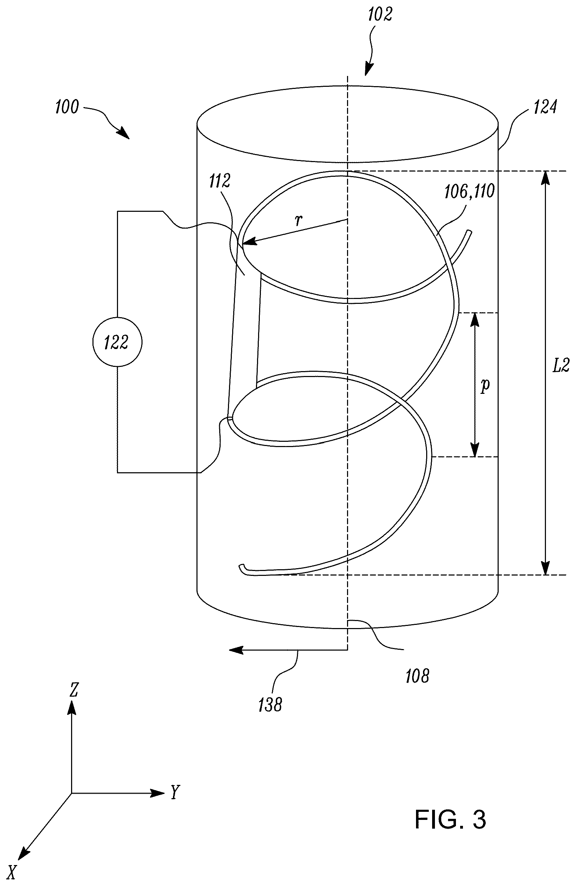

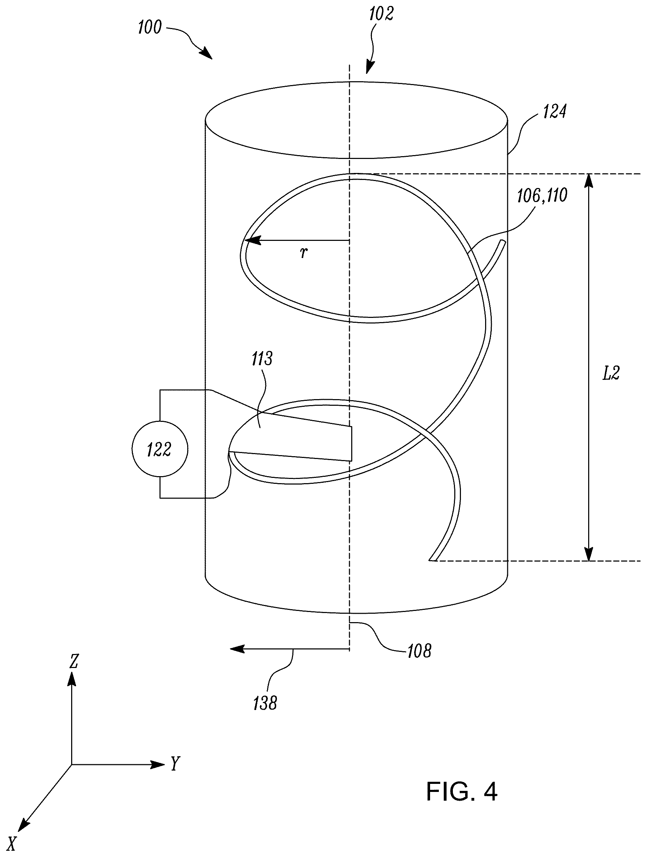

Further, the tendon 106 and/or the first sensor 110 are disposed proximal to the backbone 118 of the continuum robot 102 and/or proximal to an outer surface 124 (shown in FIGS. 3 and 4) defined by the continuum robot 102. In the illustrated embodiment of FIG. 2A, the tendon 106 and the first sensor 110 is disposed proximal to the outer surface 124 defined by the continuum robot 102. It should be noted that the tendon 106 and/or the first sensor 110 are disposed within the continuum robot 102.

In an embodiment, a routing 140 of the tendon 106 and/or the first sensor 110 may include a straight routing, a helical routing, a hybrid routing, a braided routing, a routing at various radii, a zig-zag routing, an asymmetric routing, and/or a segmented routing. In the illustrated example of FIG. 2A, the tendon 106 and the first sensor 110 are disposed in a helical arrangement, whereas other tendons from the plurality of tendons 126 have the straight routing.

The aforesaid routing 140 of the tendon 106 and/or the first sensor 110 may reduce torsion of the continuum robot 102 due to redistribution of torsion into axial and torsional loads. The aforesaid routing 140 may also simplify computations of the twists and the torsion in the continuum robot 102 and may improve the control of the continuum robot 102.

In some examples, the system 100 may include multiple tendons 106 and/or multiple first sensors 110. In such examples, one of more tendons 106 and/or first sensors 110 may be employed for sensing, and one of more tendons 106 and/or first sensors 110 for actuation.

The first sensor 110 is configured to generate an information related to a curvature of the tendon 106 and/or the first sensor 110. In an embodiment, the information related to the curvature of the first sensor 110 includes a strain distribution at one or more locations of the tendon 106 and/or the first sensor 110. The strain distributions at one or more locations of the tendon 106 and/or the first sensor 110 may accurately provide the information related to the curvature of the first sensor 110.

In an embodiment, the information related to the curvature of the first sensor 110 is determined along each of an X-axis, a Y-axis, and a Z-axis of the continuum robot 102. The first sensor 110 extending along the central axis 108 of the continuum robot 102 may allow accurate determination of the information related to the curvature of the first sensor 110 along each of the X-axis, the Y-axis, and the Z-axis of the continuum robot 102. The determination of the curvature of the first sensor 110 along each of the X-axis, the Y-axis, and the Z-axis of the continuum robot 102 may in turn provide for the accurate generation of the information related to the curvature of the first sensor 110.

In an embodiment, the first sensor 110 includes a Fibre Bragg grating (FBG) sensor. In an embodiment, the first sensor 110 includes a single-core FBG sensor, a multi-core FBG sensor, or a FBG sensor including multiple core fibres. The FBG sensor includes an optical fibre. The optical fibre has at least a FBG positioned at a joint within the continuum robot 102. If a bundle of fibres has been used, a FBG may be present at a point corresponding to joint positions. A Fibre Bragg grating is a length of optical fibre that has a distributed Bragg reflector constructed within a short segment of it. The Bragg reflector allows certain wavelengths to pass and others to be reflected. The optical fibres can be single, multicore, or multiple core fibres. As light passes through the optical fibre, it is reflected at each of the gratings at a specific wavelength called the Bragg wavelength. The shift in the Bragg wavelengths can be used to determine the information related to the curvature of the first sensor 110.

The FBG sensors may be used for enhanced proprioception of the continuum robot 102 because of their small diameter, flexibility, and immunity to electromagnetic interference, which may enable the accurate generation of the information related to the curvature of the first sensor 110. Further, the first sensor 110 may provide an enriched dataset corresponding to the information related to the curvature of the first sensor 110.

**FIG. 3** shows a perspective view of the system 100 of FIG. 2A with having an actuator 112 placed parallel to the central axis 108, according to an embodiment of the present disclosure.

**FIG. 4** shows a perspective view of the system 100 of FIG. 2A having an actuator 113 placed perpendicular to the central axis 108, according to an embodiment of the present disclosure.

Referring to FIGS. 2A, 3, and 4, the system 100 further includes at least one actuator 112, 113 coupled to the tendon 106 and/or the first sensor 110. The at least one actuator 112, 113 is operatively coupled with the tendon 106 and/or the first sensor 110. The at least one actuator 112, 113 is configured to control at least a pitch angle *α* of the tendon 106 and/or the first sensor 110 and/or a radius r of the tendon 106 and/or the first sensor 110 relative to the central axis 108.

In an embodiment, the at least one actuator 112, 113 includes an elastomer actuator, a piezoelectric actuator, a pneumatic artificial muscle, an electroactive polymer, and/or a shape-memory alloy. The at least one actuator 112, 113 may include rings or bands. The at least one actuator 112, 113 may be chosen as per the desired applications for improved performance of the actuator 112, 113. It should be noted that the system 100 may include each of the actuators 112, 113. In an example, the actuator 112, 113 may include a dielectric elastomer actuator (DEA). The DEA may exhibit a higher energy density, i.e. a large strain output for a relatively low volume, may provide improved control, and may be lightweight, thereby making it ideal for small-scale continuum robots requiring minimal stiffness interference. Further, the actuator 112, 113 may be modified by providing protective coatings, fluidic channels, insulation layers, and so on to ensure that the actuator 112, 113 can function in extreme conditions such as high temperature, radiation, or chemical exposure.

In an embodiment, the at least one actuator 112, 113 is adapted to move the tendon 106 and/or the first sensor 110 along the central axis 108 and/or the radial axis 138 of the continuum robot 102. Specifically, the actuator 112 moves the tendon 106 and/or the first sensor 110 along the central axis 108 and the actuator 113 moves the tendon 106 and/or the first sensor 110 in the radial axis 138. The controlled movement of the tendon 106 and/or the first sensor 110 along the central axis 108 and/or the radial axis 138 of the continuum robot 102 provides for controlling of the at least the pitch angle *α* of the tendon 106 and/or the first sensor 110 and/or the radius r of the tendon 106 and/or the first sensor 110. Thus, the actuator 112, 113 may allow correction of the current shape of the continuum robot 102 along each of the central axis 108 and/or the radial axis 138.

In an embodiment, the at least one actuator 112, 113 includes a plurality of actuators 112, 113 disposed along the central axis 108.

In an embodiment, the system 100 further includes a driver circuit 122 coupled to the at least one actuator 112, 113. The driver circuit 122 is configured to control the at least one actuator 112, 113 to change the current shape of the tendon 106 and/or the first sensor 110. The driver circuit 122 may modulate an electric field as a function of the input commands. Thereby the actuator 112, 113 is adapted to move the tendon 106 and/or the first sensor 110. The driver circuit 122 may include high-voltage amplifiers, high-voltage switching circuits such as MOSFET-based or IGBT-based switching circuits, electrostatic drive controllers, and/or embedded control systems with high-voltage modules, without any limitations.

Referring now to FIG. 2B, the system 200 includes a first sensor 210. The system 200 is substantially similar to the system 100 with common components referred to by the same numeral. The first sensor 210 is substantially similar to the first sensor 110 explained in relation to FIGS. 2A, 3, and 4. However, the tendon 106 and the first sensor 210 are disposed proximal to the backbone 118 of the continuum robot 102.

Referring now to FIG. 2C, the system 300 includes a first sensor 310. The system 300 is substantially similar to the system 100 with common components referred to by the same numeral. The first sensor 310 is substantially similar to the first sensor 110 explained in relation to FIGS. 2A, 3, and 4. However, the tendon 106 and the first sensor 310 are disposed between the backbone 118 and the outer surface 124 defined by the continuum robot 302. Specifically, some portions of the tendon 106 and the first sensor 310 are disposed proximal to the outer surface 124 and some portions of the tendon 106 and the first sensor 310 are disposed proximal to the backbone 118.

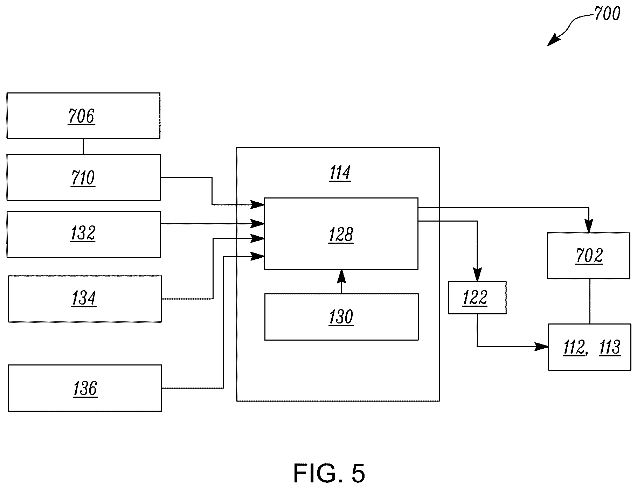

**FIG. 5** illustrates a system 700 for controlling a continuum robot 702 whilst inspecting or repairing the component 104 (see FIG. 2A). The system 700 is substantially similar to the system 100 (see FIG. 2A) with common components referred to by the same numeral. The continuum robot 702 is substantially similar to the continuum robot 102 (see FIG. 2A) with common components referred to by the same numeral. The system 700 includes a first sensor 710. The first sensor 710 is substantially similar to the first sensor 110 explained in relation to FIGS. 2A, and 3 to 4.

In an embodiment, the first sensor 710 is coupled with the tendon 706 of the continuum robot 702. The coupling of the tendon 706 with the first sensor 710 may ensure precise consideration of dynamics of the tendon 706 such as direct forces exerted by the tendon 706.

The system 100 further includes a controller 114 communicably coupled with the first sensor 710 and the at least one actuator 112, 113. The controller 114 may also be associated with the continuum robots 102, 202, 302 (see FIGS. 2A to 2C). The controller 114 is a device comprising hardware, software, or a combination of both along with memory 130. The controller 114 receives data and processes the data via processors 128, to manage the inspection or the repairing of the component 104. The controller 114 may include one or more processors 128 and one or more memories 130 in communication with the one or more processors 128. In some examples, the memories 130 may include a random access memory (RAM), such as synchronous dynamic random access memory (SDRAM), a read-only memory (ROM), a non-volatile random access memory (NVRAM), an electrically erasable programmable read-only memory (EEPROM), a FLASH memory, a magnetic or optical data storage media, and the like, that can be used to store various information or desired program codes in the form of instructions or data structures and that can be accessed by the processors 128.

Further, the processors 128 may execute various types of digitally stored instructions, such as software applications or algorithms, retrieved from the memories 130, or a firmware program which may enable the processors 128 to perform a wide variety of operations. It should be noted that the processors 128 may embody a single microprocessor or multiple microprocessors for receiving various input signals and generating output signals. Numerous commercially available microprocessors may perform the functions of the processors 128. Each processor 128 may further include a general processor, a central processing unit, an application specific integrated circuit (ASIC), a digital signal processor, a field programmable gate array (FPGA), a digital circuit, an analog circuit, a microcontroller, any other type of processor, or any combination thereof. Each processor 128 may include one or more components that may be operable to execute computer executable instructions or computer code that may be stored and retrieved from the memories 130.

The controller 114 is configured to receive, from the first sensor 710, the information related to the curvature of the first sensor 710. The controller 114 receives the information related to the curvature of the first sensor 710 while the inspection or repair operation is being performed on the component 104.

The controller 114 is further configured to determine a current shape of the tendon 706 and/or the first sensor 710 based on at least on the information related to the curvature of the first sensor 710. The controller 114 may use control algorithms and/or kinematic modelling to determine the current shape of the tendon 706 and/or the first sensor 710.

In an embodiment, the current shape of the tendon 706 and/or the first sensor 710 is determined based on at least a tension in the tendon 706 and/or the first sensor 710, a displacement of the tendon 706 and/or the first sensor 710, and/or a pose of the continuum robot 702.

The determination of the tension in the tendon 706 and/or the first sensor 710, the displacement of the tendon 706 and/or the first sensor 710, and/or the pose of the continuum robot 702 may allow accurate determination of the current shape of the tendon 706 and/or the first sensor 710 via mathematical methods and kinematic modelling within the controller 114. In some examples, the controller 114 may determine the tension in the tendon 706 and/or the first sensor 710, the displacement of the tendon 706 and/or the first sensor 710, and/or the pose of the continuum robot 702 based on inputs received from the first sensor 710.

In an embodiment, the system 700 includes a second sensor 132 configured to generate an information related to the tension in the tendon 706 and/or the first sensor 710. The second sensor 132 may include a load cell that may be attached to the tendon 706 and/or the first sensor 710. The load cell may detect variations in tensile or compressive forces on the continuum robot 702 to generate the information related to the tension in the tendon 706 and/or the first sensor 710. The controller 114 receives and processes the information from the second sensor 132 to determine the tension in the tendon 706 and/or the first sensor 710.

In an embodiment, of the system 700 further includes a third sensor 134 configured to generate an information related to the displacement of the tendon 706 and/or the first sensor 710. The third sensor 134 may include an encoder attached to a drive motor of the continuum robot 702 or an external displacement sensor attached to the continuum robot 702. The encoder may measure a change in a length L1 of the continuum robot 702 using optical, magnetic, capacitive, or inductive sensing sensors to generate information related to the displacement of the tendon 706 and/or the first sensor 710.

The controller 114 receives and processes the information from the third sensor 134 to determine the displacement of the tendon 706 and/or the first sensor 710.

In an embodiment, the system 700 further includes a fourth sensor 136 configured to generate an information related to the pose of the continuum robot 702. The fourth sensor 136 may include an inertial measurement unit (IMU) attached to the continuum robot 702. The IMU may continuously record an acceleration, an angular velocity, and/or a magnetic field data to generate the information related to the pose of the continuum robot 702.

The controller 114 receives and processes the information from the fourth sensor 136 to determine the pose of the continuum robot 702. The controller 114 may compute the pose of the continuum robot 702 via control algorithms and kinematic modelling.

In an embodiment, the controller 114 is configured to determine a torsion in the continuum robot 702. The controller 114 is further configured to determine a torsion *τ_{f}*(*s*) in the tendon 706 and/or the first sensor 710 based on the torsion in the continuum robot 702. The controller 114 is further configured to modify the current pitch angle *α*1 to control the torsion *τ_{f}*(*s*) (e.g. reduce the torsion) in the tendon 706 and/or the first sensor 710.

In an embodiment, the controller 114 is configured to determine the torsion in the continuum robot 702. The controller 114 is further configured to determine a desired torsion in the continuum robot 702. The controller 114 is further configured to modify the current pitch angle *α*1 to match the torsion in the continuum robot 702 and the desired torsion in the continuum robot 702.

The controller 114 may determine the torsion in the continuum robot 702 using kinematics or other sensing methods. Thus, the system may be used for correcting the current position of tendon-driven continuum robots that are subjected to torsion during the repair or inspection of the component.

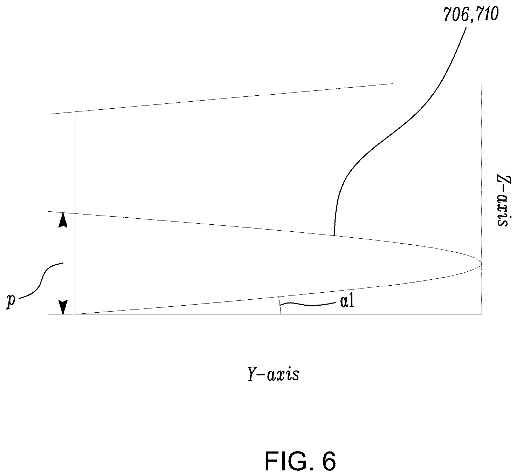

**FIG. 6** illustrates a current pitch angle *α*1 of the tendon 706 and/or the first sensor 710, in accordance with an embodiment of the present disclosure.

Referring to FIGS. 5 and 6, the controller 114 is further configured to receive the current pitch angle *α*1 of the tendon 706 and/or the first sensor 710. The current pitch angle *α*1 of the tendon 706 and/or the first sensor 710 may be prestored in the controller 114 and may be a previously noted pitch angle of the tendon 706 and/or the first sensor 710.

The controller 114 is further configured to determine a desired pitch angle *α*2 of the tendon 706 and/or the first sensor 710 based on at least the current shape of the tendon 706 and/or the first sensor 710 and the current pitch angle *α*1 of the tendon 706 and/or the first sensor 710. This may allow accurate determination of the desired pitch angle *α*2 of the tendon 706 and/or the first sensor 710. The desired pitch angle *α*2 may be determined by the controller 114 based upon the kinematic modelling and the mathematical methods.

The accurate determination of the current shape of the tendon 706 and/or the first sensor 710 during the inspection or repair of the component 104 may be used to determine deviations of the current pitch angle *α*1 from the desired pitch angle *α*2, which may be in turn used to control the continuum robot 702 whilst the inspection or repair of the component 104.

In an embodiment, the desired pitch angle *α*2 of the tendon 706 and/or the first sensor 710 is determined based on at least the radius r of the tendon 706 and/or the first sensor 710 from the central axis 108 (see FIG. 2A) of the continuum robot 702, a nominal pitch of the tendon 706 and/or the first sensor 710, a curvature of the continuum robot 702, and/or the current pitch angle *α*1. The controller 114 via a closed-loop control such as Proportional-Integral-Derivative Control or Model Predictive Control may determine the desired pitch angle *α*2 of the tendon 706 and/or the first sensor 710.

The aforesaid determination of the desired pitch angle *α*2 of the tendon 706 and/or the first sensor 710 may minimise torsional loads or maximise actuation force of the continuum robot 702.

Referring to FIGS. 3, 4, 5 and 6, the controller 114 is further configured to actuate the at least one actuator 112, 113 to at least alter the current pitch angle *α*1 of the tendon 706 and/or the first sensor 710 to the desired pitch angle *α*2, and/or the radius r of the tendon 706 and/or the first sensor 710 relative to the central axis 108 of the continuum robot 702. The current pitch angle *α*1 is altered in real time based on the movement of the tendon 706 and/or the first sensor 710 along the radial axis 138 (see FIGS. 3 and 4) or the central axis 108 of the continuum robot 702. The abovesaid alteration of the pitch angle *α* may modify mechanical advantage, friction pathways, or force transmission associated with the continuum robot 702, which may in turn improve a performance of the continuum robot 702.

In an embodiment, the system 100 further includes the driver circuit 122 coupled to the controller 114 and the at least one actuator 112, 113. The driver circuit 122 is configured to control the at least one actuator 112, 113 based on an input command received from the controller 114. The driver circuit 122 may modulate an electric field as a function of the input commands from the controller 114, which may cause the actuator 112, 113 to move the tendon 706 and/or the first sensor 710.

The current pitch angle *α*1 is altered in real time based on any one of a movement of the tendon 706 and/or the first sensor 710 along the radial axis 138 or the central axis 108 of the continuum robot 702. The alteration of the current pitch angle *α*1 to the desired pitch angle *α*2 in real time ensures a twist *τ*(*s*) in the continuum robot 702 to remain in safe limits. The abovesaid alteration of the current pitch angle *α*1 modifies mechanical advantage, friction pathways, or force transmission from the continuum robot 702.

Further, the controller 114 is configured to actuate the at least one actuator 112, 113 to at least alter a pitch p of the tendon 706 and/or the first sensor 710. Altering the pitch p of the tendon 706 and/or the first sensor 710 may in turn allow variation in the shape of continuum robot 702, thereby allowing disposition of the continuum robot 702 in a desired shape.

Further, the controller 114 is configured to selectively actuate one or more of the plurality of actuators 112, 113 to at least alter the current pitch angle *α*1 of the tendon 706 and/or the first sensor 710 to the desired pitch angle *α*2, the radius r of the tendon 706 and/or the first sensor 710 relative to the central axis 108 of the continuum robot 702, and/or the pitch p of the tendon 706 and/or the first sensor 710. The selective actuation of the one or more of the plurality of actuators 112, 113 eases alteration of the current pitch angle *α*1 of the tendon 706 and/or the first sensor 710 to the desired pitch angle *α*2, the radius r of the tendon 706 and/or the first sensor 710, and/or the pitch p of the tendon 706 and/or the first sensor 710 relative to the central axis 108 of the continuum robot 702. The selective actuation may cause the tendon 706 and/or the first sensor 710 to be disposed at different pitches, radii, and/or pitch angles relative to the length L1 of the continuum robot 702. This may provide for effective twist and/or torsional compensation in the continuum robot 702.

The alteration of the current pitch angle *α*1 of the tendon 706 and/or the first sensor 710 to the desired pitch angle *α*2, the radius r of the tendon 706 and/or the first sensor 710, and/or the pitch p of the tendon 706 and/or the first sensor 702 relative to the central axis 108 of the continuum robot 710 may improve the performance of the continuum robot 702 whilst inspection or repair of the component 104.

In an embodiment, the alteration of at least one of the current pitch angle *α*1 of the tendon 706 and/or the first sensor 710 includes a change in a path length L2 (schematically shown in FIGS. 3 and 4) of the tendon 706 and/or the first sensor 710. The path length L2 of the tendon 706 and/or the first sensor 710 reduces with an increase in the current pitch angle *α*1 of the tendon 706 and/or the first sensor 710 and the path length L2 of the tendon 706 and/or the first sensor 710 increases with a decrease in the current pitch angle *α*1 of the tendon 706 and/or the first sensor 710.

The controller 114 is further configured to correct a current position of the continuum robot 702 based on at least the alteration of the current pitch angle *α*1 of the tendon 706 and/or the first sensor 710 to the desired pitch angle *α*2, and/or the radius r of the tendon 706 and/or the first sensor 710. The controller 114 is further configured to correct the current position of the continuum robot 702 based at least on the alteration of the pitch p of the tendon 706 and/or the first sensor 710.

Correcting the current position of the continuum robot 702 may allow accurate control of the desired shape of the continuum robot 702, may control a shape accuracy of the tendon 706 and/or the first sensor 710 by minimizing fiber/sensor torsion, and may allow for torsional compensation that is crucial during the repair or inspection of the component 104.

The mathematical presentation provided below may be used to determine curvatures and the torsional loads as well as twists in the continuum robot 702.

### Helical fibre path parameterisation

The information related to the curvature of the first sensor 710 along each of the X-axis, the Y-axis, and the Z-axis of the continuum robot 702 is parameterised as: $x \left(s\right) = r cos \left(θ\left(s\right)\right)$ $y \left(s\right) = r sin \left(θ\left(s\right)\right)$ $z \left(s\right) = \frac{p}{2 π} θ \left(s\right)$ where, *θ*(*s*) is the angular position of the tendon 706 and/or the first sensor 710 as a function of an arc length *s* of the continuum robot 702, r is the radius of the tendon 706 and/or the first sensor 710 (consistent along the arc length s) from the central axis 108, and p is the pitch of the tendon 706 and/or the first sensor 710 .

The desired pitch angle *α*2 at one or more locations of the tendon 706 and/or the first sensor 710 is determined to minimise torsional loads or maximise actuation force. The pitch p and the radius r may be regulated to minimise torsional loads or maximise actuation force. $tan \left(α2\right) = \frac{p / 2 π}{r}$

### Dynamic Pitch Control

If the tendon 706 and/or the first sensor 710 is wrapped helically away from the central axis 108, a portion of the twist *τ*(*s*) in the continuum robot 702 is manifested in local curvature or extension of the tendon 706 and/or the first sensor 710 rather than pure torsion about an axis of the tendon 706 and/or the first sensor 710.

A simplified relationship (for small bends and uniform geometry) can be written as:${τ}_{f} \left(s\right) = τ \left(s\right) cos \left(α\right) - κ \left(s\right) sin \left(α\right)$ where, *τ_{f}*(*s*) is the torsion in the tendon 706 and/or the sensor 710, *κ*(*s*) is the curvature of the continuum robot 702 at the arc length *s* of the continuum robot 702, and *α* is the pitch angle of the first sensor 710.

Here, the factor *τ*(*s*) cos(*α*) represents the portion of the twist *τ*(*s*) of the continuum robot 702 transmitted to a tangent of the tendon 706 or the sensor 710, and the factor -*κ*(*s*) sin(*α*) reflects how bending of the continuum robot 706 contributes towards a rotation around the axis of the first sensor 710 due to an offset of the first sensor 710.

In some examples, strain distributions measured in the first sensor 710 may reveal a relationship between the twist *τ*(*s*) and the curvature *κ*(*s*) of the continuum robot 702 for the arc length s, making it possible to infer the twist *τ*(*s*) from the difference in wavelength signals received from the first sensor 710 along the one or more locations of the first sensor 710.

Further, in some examples, baseline wavelength signals, such as with load and without loads, from the first sensor 710, may relate the data received from the first sensor 710 with the curvature *κ*(*s*) of the continuum robot 702 and the torsion *τ_{f}*(*s*) in the tendon 706 and/or the first sensor 710. This may enable calibration of the first sensor 710.

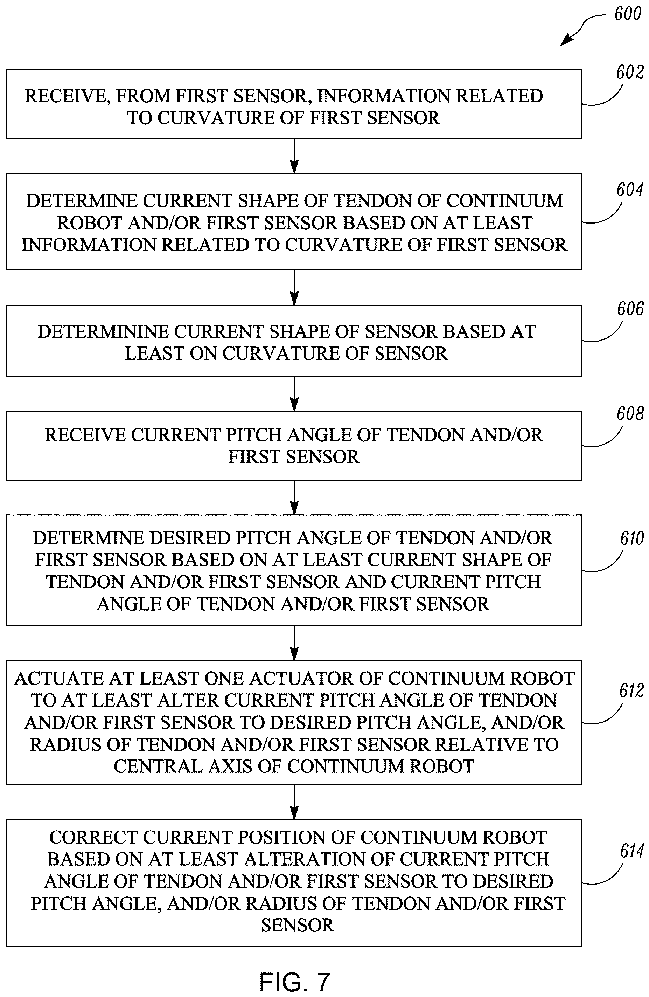

**FIG.** 7 shows a flowchart of a method 600 for controlling the continuum robot 102, 202, 302, 702 whilst inspecting or repairing the component 104, in accordance with an embodiment of the present disclosure. The method 600 will be described with further reference to FIGS. 1 to 6.

Referring to FIGS. 1 to 6, at step 602, the method 600 includes receiving, from the first sensor 110, 210, 310, 710 coupled to the continuum robot 102, 202, 302, 702, the information related to the curvature of the first sensor 110, 210, 310, 710. The first sensor 110, 210, 310, 710 extends along the central axis 108 of the continuum robot 102, 202, 302, 702. The controller 114 receives the information related to the curvature of the first sensor 110, 210, 310, 710 while the inspection or repair operation is being performed on the component 104.

In an embodiment, the first sensor 110, 210, 310, 710 includes the FBG sensor. In an embodiment, the first sensor 110, 210, 310 includes the tendon 106, 706 from the plurality of tendons 126 of the continuum robot 102, 202, 302 or the first sensor 710 is coupled with the tendon 106, 706 of the continuum robot 702.

At step 604, the method 600 further includes determining the current shape of the tendon 106, 706 of the continuum robot 102, 202, 302, 702 and/or the first sensor 110, 210, 310, 710 based on at least the information related to the curvature of the first sensor 110, 210, 310, 710. The tendon 106, 706 of the continuum robot 102, 202, 302, 702 extends along the central axis 108 of the continuum robot 102, 202, 302, 702.

In an embodiment, the step 604 of determining the current shape of the tendon 106, 706 of the continuum robot 102, 202, 302, 702 and/or the first sensor 110, 210, 310, 710 further includes determining the current shape of the tendon 106, 706 and/or the first sensor 110, 210, 310, 710 based on at least the tension in the tendon 106, 706 and/or the first sensor 110, 210, 310, 710, the displacement of the tendon 106, 706 and/or the first sensor 110, 210, 310, 710, and/or the pose of the continuum robot 102, 202, 302, 702.

At step 606, the method 600 further includes receiving the current pitch angle *α*1 of the tendon 106, 706 and/or the first sensor 110, 210, 310, 710. The current pitch angle *α*1 of the tendon 106, 706 and/or the first sensor 110, 210, 310, 710 may be prestored in the controller 114 and may be the previously noted pitch angle of the tendon 106, 706 and/or the first sensor 110, 210, 310, 710.

At step 608, the method 600 further includes determining the desired pitch angle *α*2 of the tendon 106, 706 and/or the first sensor 110, 210, 310, 710 based on at least the current shape of the tendon 106, 706 and/or the first sensor 110, 210, 310, 710 and the current pitch angle *α*1 of the tendon 106, 706 and/or the first sensor 110, 210, 310, 710.

At step 610, the method 600 further includes actuating the at least one actuator 112, 113 of the continuum robot 102, 202, 302, 702 to at least alter the current pitch angle *α*1 of the tendon 106, 706 and/or the first sensor 110, 210, 310, 710 to the desired pitch angle *α*2, and/or the radius r of the tendon 106, 706 and/or the first sensor 110, 210, 310, 710 relative to the central axis 108 of the continuum robot 102, 202, 302, 702. The at least one actuator 112, 113 is operatively coupled with the tendon 106, 706 and/or the first sensor 110, 210, 310, 710.

In an embodiment, the step 610 of actuating the at least one actuator 112, 113 to at least alter the current pitch angle *α*1 of the tendon 106, 706 and/or the first sensor 110, 210, 310, 710 to the desired pitch angle *α*2, and/or the radius r of the tendon 106, 706 and/or the first sensor 110, 210, 310, 710 further includes moving the tendon 106, 706 and/or the first sensor 110, 210, 310, 710 along the central axis 108 and/or the radial axis 138 of the continuum robot 102, 202, 302, 702.

The current pitch angle *α*1 of the tendon 106, 706 and/or the first sensor 110, 210, 310, 710 may be prestored in the controller 114 and may be a previous/last noted pitch angle of the tendon 106, 706 and/or the first sensor 110, 210, 310, 710. The current pitch angle *α*1 is altered in real time based on the movement of the tendon 106, 706 and/or the first sensor 110, 210, 310, 710 along the radial axis 138 or the central axis 108 of the continuum robot 102, 202, 302, 702.

At step 612, the method 600 further includes correcting the current position of the continuum robot 102, 202, 302, 702 based on at least the alteration of the current pitch angle *α*1 of the tendon 106, 706 and/or the first sensor 110, 210, 310, 710 to the desired pitch angle *α*2, and/or the radius r of the tendon 106, 706 and/or the first sensor 110, 210, 310, 710.

In an embodiment, the method 600 further includes a step of determining the torsion in the continuum robot 102, 202, 302, 702. The method 600 further includes a step of determining the torsion *τ_{f}*(*s*) in the tendon 106, 706 and/or the first sensor 110, 210, 310, 710 based on the torsion in the continuum robot 102, 202, 302, 702. The method 600 further includes a step of modifying the current pitch angle *α*1 to reduce the torsion *τ_{f}*(*s*) in the tendon 106, 706 and/or the first sensor 110, 210, 310, 710.

Referring to FIGS. 2A to 7, the system 100, 200, 300, 700 and the method 600 described herein may allow improved control of the shape of the continuum robot 102, 202, 302, 702 by dynamically, accurately, and flexibly controlling at least the pitch angle *α* and/or the radius r of the tendon 106, 706 and/or the first sensor 110, 210, 310, 710 of the continuum robot 102, 202, 302, 702 whilst inspection or repair of the component 104. Specifically, the system 100, 200, 300, 700 and the method 600 corrects the current position of the continuum robot 102, 202, 302, 702 to control the current shape of the continuum robot 102, 202, 302, 702. The system 100, 200, 300, 700 and the method 600 may control the current shape of the first sensor 110, 210, 310, 710 and/or tendon 106, 706 to correct the current position of the continuum robot 102, 202, 302, 702. The correction of the current position of the continuum robot 102, 202, 302, 702 may eliminate errors due to parasitic twists, friction, strain, temperature, manufacturing variations, vibrations, signal processing, and/or humidity that may otherwise act on the continuum robot 102, 202, 302, 702. The system 100, 200, 300, 700 and the method 600 may be applicable to tendon-driven continuum robots. The system 100, 200, 300, 700 and the method 600 may correct the current position of the continuum robot 102, 202, 302, 702 without the need of complex, or data-driven methods, thereby enabling repeatability and robustness.

The system 100, 200, 300, 700 and the method 600 may be applicable to flexible instruments, catheters, borescopes, and any flexible tubular device requiring measurement or compensation of twist in real-time with less torsional stresses on the first sensor 110, 210, 310, 710. Further, the system 100, 200, 300, 700 and the method 600 works well for continuum robots 102, 202, 302, 702, and/or any other flexible string-like device that may be used in inspection and repair of components of engines, automobiles, aerospace applications, medicinal applications, or any other environments. Some examples of application of the system 100, 200, 300, 700 and the method 600 of the present disclosure may include minimally invasive surgery, search and rescue operations, and so on. Further, the system 100, 200, 300, 700 and the method 600 may provide shape sensing and correction of flexible robots (such as, pneumatically actuated or concentric tube robots), flexible devices (such as, an endoscope or a borescope), and so on.

The system 100, 200, 300, 700 and the method 600 may work well for active continuum robots 102, 202, 302, 702 possessing a random passive section or both an active section and a passive section, such as Continuum robot for Flexible Operations (COBRA) robot. The system 100, 200, 300, 700 and the method 600 may operate in real-time during the repair or inspection of the component 104 and may allow monitoring and optimizing of the repair or inspection operation being performed on the component 104. Further, the system 100, 200, 300, 700 and the method 600 may enhance a service life of the continuum robot 102, 202, 302, 702 via reduction in wear and tear of the components of the continuum robot 102, 202, 302, 702 such as tendons 126 of the continuum robot 102, 202, 302, 702. Furthermore, the system 100, 200, 300, 700 and the method 600 may enhance a performance of the inspection or repair of the component 104.

It will be understood that the invention is not limited to the embodiments above-described and various modifications and improvements can be made without departing from the concepts described herein. Except where mutually exclusive, any of the features may be employed separately or in combination with any other features and the disclosure extends to and includes all combinations and sub-combinations of one or more features described herein.

## Claims

1. A system (100, 200, 300, 700) for controlling a continuum robot (102, 202, 302, 702) whilst inspecting or repairing a component (104), the system (100, 200, 300, 700) comprising:
a tendon (106, 706) of the continuum robot (102, 202, 302, 702) extending along a central axis (108) of the continuum robot (102, 202, 302, 702);
a first sensor (110, 210, 310, 710) coupled to the continuum robot (102, 202, 302, 702) and extending along the central axis (108) of the continuum robot (102, 202, 302, 702), the first sensor (110, 210, 310, 710) being configured to generate an information related to a curvature of the first sensor (110, 210, 310, 710);
at least one actuator (112, 113) coupled to the tendon (106, 706) and/or the first sensor (110, 210, 310, 710), the at least one actuator (112, 113) being configured to control at least a pitch angle (*α*) of the tendon (106, 706) and/or the first sensor (110, 210, 310, 710) and/or a radius (r) of the tendon (106, 706) and/or the first sensor (110, 210, 310, 710) relative to the central axis (108), and the at least one actuator (112, 113) being operatively coupled with the tendon (106, 706) and/or the first sensor (110, 210, 310, 710); and
a controller (114) communicably coupled with the first sensor (110, 210, 310, 710) and the at least one actuator (112, 113), wherein the controller (114) is configured to:
receive, from the first sensor (110, 210, 310, 710), the information related to the curvature of the first sensor (110, 210, 310, 710);
determine a current shape of the tendon (106, 706) and/or the first sensor (110, 210, 310, 710) based on at least on the information related to the curvature of the first sensor (110, 210, 310, 710);
receive or determine a current pitch angle (*α*1) of the tendon (106, 706) and/or the first sensor (110, 210, 310, 710);
determine a desired pitch angle (*α*2) of the tendon (106, 706) and/or the first sensor (110, 210, 310, 710) based on at least the current shape of the tendon (106, 706) and/or the first sensor (110, 210, 310, 710) and the current pitch angle (*α*1) of the tendon (106, 706) and/or the first sensor (110, 210, 310, 710);
actuate the at least one actuator (112, 113) to at least alter the current pitch angle (*α*1) of the tendon (106, 706) and/or the first sensor (110, 210, 310, 710) to the desired pitch angle (*α*2), and/or the radius (r) of the tendon (106, 706) and/or the first sensor (110, 210, 310, 710) relative to the central axis (108) of the continuum robot (102, 202, 302, 702); and
correct a current position of the continuum robot (102, 202, 302, 702) based on at least the alteration of the current pitch angle (*α*1) of the tendon (106, 706) and/or the first sensor (110, 210, 310, 710) to the desired pitch angle (*α*2), and/or the radius (r) of the tendon (106, 706) and/or the first sensor (110, 210, 310, 710).

2. The system (100, 200, 300, 700) of claim 1, wherein the first sensor (110, 210, 310, 710) includes a Fibre Bragg grating (FBG) sensor.

3. The system (100, 200, 300, 700) of claim 1 or 2, wherein the information related to the curvature of the first sensor (110, 210, 310, 710) includes a strain distribution at one or more locations of the first sensor (110, 210, 310, 710).

4. The system (100, 200, 300, 700) of any preceding claim, wherein the current shape of the tendon (106, 706) and/or the first sensor (110, 210, 310, 710) is determined based on at least a tension in the tendon (106, 706) and/or the first sensor (110, 210, 310, 710), a displacement of the tendon (106, 706) and/or the first sensor (110, 210, 310, 710), and/or a pose of the continuum robot (102, 202, 302, 702).

5. The system (100, 200, 300, 700) of claim 4, further comprising one or more of:
a second sensor (132) configured to generate information related to the tension in the tendon (106, 706) and/or the first sensor (110, 210, 310, 710);
a third sensor (134) configured to generate information related to the displacement of the tendon (106, 706) and/or the first sensor (110, 210, 310, 710); and
a fourth sensor (136) configured to generate information related to the pose of the continuum robot (102, 202, 302, 702).

6. The system (700) of any preceding claim, wherein the first sensor (710) is coupled with the tendon (706) of the continuum robot (702).

7. The system (100, 200, 300, 700) of any preceding claim, wherein the information related to the curvature of first sensor (110, 210, 310, 710) is determined along each of an X-axis, a Y-axis, and a Z-axis of the continuum robot (102, 202, 302, 702).

8. The system (100, 200, 300, 700) of any preceding claim, wherein the at least one actuator (112, 113) is adapted to move the tendon (106, 706) and/or the first sensor (110, 210, 310, 710) along the central axis (108) and/or a radial axis (138) of the continuum robot (102, 202, 302, 702).

9. The system (100, 200, 300, 700) of any preceding claim, wherein the controller (114) is configured to actuate the at least one actuator (112, 113) to at least alter a pitch (p) of the tendon (106, 706) and/or the first sensor (110, 210, 310, 710).

10. The system (100, 200, 300, 700) of claim 9, wherein the at least one actuator (112, 113) includes a plurality of actuators (112, 113) disposed along the central axis (108), the controller (114) being configured to selectively actuate one or more of the plurality of actuators (112, 113) to at least alter the current pitch angle (*α*1) of the tendon (106, 706) and/or the first sensor (110, 210, 310, 710) to the desired pitch angle (*α*2), the radius (r) of the tendon (106, 706) and/or the first sensor (110, 210, 310, 710) relative to the central axis (108) of the continuum robot (102, 202, 302, 702), and/or the pitch (p) of the tendon (106, 706) and/or the first sensor (110, 210, 310, 710).

11. The system (100, 200, 300, 700) of any preceding claim, wherein the at least one actuator (112, 113) includes an elastomer actuator, a piezoelectric actuator, a pneumatic artificial muscle, an electroactive polymer, and/or a shape-memory alloy.

12. The system (100, 200, 300, 700) of any preceding claim, further comprising a driver circuit (122) coupled to the controller (114) and the at least one actuator (112, 113), the driver circuit (122) being configured to control the at least one actuator (112, 113) based on an input command received from the controller (114).

13. The system (100, 200, 300, 700) of any preceding claim, wherein the alteration of at least one of the current pitch angle (*α*1) of the tendon (106, 706) and/or the first sensor (110, 210, 310, 710) includes a change in a path length (L2) of the tendon (106, 706) and/or the first sensor (110, 210, 310, 710).

14. The system (100, 200, 300, 700) of any preceding claim, wherein the continuum robot (102, 202, 302, 702) includes a backbone (118) having a plurality of vertebrae (120) and a plurality of tendons (126) circumferentially arranged around the backbone (118) at various angular positions (*θ*(*s*)), the tendon (106, 706) and/or the first sensor (110, 210, 310, 710) being disposed proximal to the backbone (118) of the continuum robot (102, 202, 302, 702) and/or proximal to an outer surface (124) defined by the continuum robot (102, 202, 302, 702).

15. A method (600) for controlling a continuum robot (102, 202, 302, 702) whilst inspecting or repairing a component (104), the method (600) comprising:
receiving, from a first sensor (110, 210, 310, 710) coupled to the continuum robot (102, 202, 302, 702), an information related to a curvature of the first sensor (110, 210, 310, 710), the first sensor (110, 210, 310, 710) extending along a central axis (108) of the continuum robot (102, 202, 302, 702);
determining a current shape of a tendon (106, 706) of the continuum robot (102, 202, 302, 702) and/or the first sensor (110, 210, 310, 710) based on at least the information related to the curvature of the first sensor (110, 210, 310, 710), the tendon (106, 706) of the continuum robot (102, 202, 302, 702) extending along the central axis (108) of the continuum robot (102, 202, 302, 702);
receiving or determining a current pitch angle (*α*1) of the tendon (106, 706) and/or the first sensor (110, 210, 310, 710);
determining a desired pitch angle (*α*2) of the tendon (106, 706) and/or the first sensor (110, 210, 310, 710) based on at least the current shape of the tendon (106, 706) and/or the first sensor (110, 210, 310, 710) and the current pitch angle (*α*1) of the tendon (106, 706) and/or the first sensor (110, 210, 310, 710);
actuating at least one actuator (112, 113) of the continuum robot (102, 202, 302, 702) to at least alter the current pitch angle (*α*1) of the tendon (106, 706) and/or the first sensor (110, 210, 310, 710) to the desired pitch angle (*α*2), and/or a radius (r) of the tendon (106, 706) and/or the first sensor (110, 210, 310, 710) relative to the central axis (108) of the continuum robot (102, 202, 302, 702), the at least one actuator (112, 113) being operatively coupled with the tendon (106, 706) and/or the first sensor (110, 210, 310, 710); and
correcting a current position of the continuum robot (102, 202, 302, 702) based on at least the alteration of the current pitch angle (*α*1) of the tendon (106, 706) and/or the first sensor (110, 210, 310, 710) to the desired pitch angle (*α*2), and/or the radius (r) of the tendon (106, 706) and/or the first sensor (110, 210, 310, 710).
